(19) Europäisches Patentamt
European Patent Office
Office européen des brevets

(11) **EP 4 644 580 A1**

(12) **EUROPEAN PATENT APPLICATION**
published in accordance with Art. 153(4) EPC

(43) Date of publication:
**05.11.2025 Bulletin 2025/45**

(21) Application number: 23912350.8

(22) Date of filing: **31.01.2023**

(51) International Patent Classification (IPC):
*C23C 2/06* *(2006.01)*    *G01N 15/08* *(2006.01)*
*G01N 27/26* *(2006.01)*    *B21D 22/02* *(2006.01)*
*C21D 9/46* *(2006.01)*

(52) Cooperative Patent Classification (CPC):
**B21D 22/02; C21D 9/46; C23C 2/06; G01N 15/08; G01N 27/26**

(86) International application number:
**PCT/KR2023/001374**

(87) International publication number:
**WO 2024/143660 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022 KR 20220190447**

(71) Applicant: **Hyundai Steel Company**
**Incheon 22525 (KR)**

(72) Inventors:
• **JUNG, Seung Pill**
  **Seoul 05543 (KR)**

• **KONG, Je Youl**
  **Cheonan-si Chungcheongnam-do 31156 (KR)**
• **PARK, Jae Myoung**
  **Pyeongtaek-si Gyeonggi-do 17840 (KR)**
• **JANG, Min-Ho**
  **Dangjin-si Chungcheongnam-do 31711 (KR)**
• **HWANG, Kyu Yeon**
  **Asan-si Chungcheongnam-do 31528 (KR)**
• **KIM, Hye Jin**
  **Hanam-si Gyeonggi-do 12900 (KR)**

(74) Representative: **Viering, Jentschura & Partner mbB**
**Patent- und Rechtsanwälte**
**Am Brauhaus 8**
**01099 Dresden (DE)**

(54) **HOT STAMPING PART**

(57)    The present disclosure relates to a hot stamping component and a method of manufacturing the same. According to the preferred present hot press component and the method of manufacturing the same, a hot press component with hydrogen embrittlement suppressed and having ultra-high strength can be obtained.

[FIG. 1]

10

EP 4 644 580 A1

**Description**

**TECHNICAL FIELD**

The present disclosure relates to a hot stamping component and a method of manufacturing the same.

**BACKGROUND**

Currently, environmental and fuel efficiency regulations and safety standards are being tightened in the automotive industry. Accordingly, the application rate of ultra-high strength steels and hot stamping steels is steadily on the rise. In particular, hot stamping steels are explored in research and development for high toughness and high strength, including the conventional 1.5 GPa hot stamping steel.

The hot stamping process is a technology that is applied for ultra-high strength by using microstructures based on the phase transformation of the material during the process, and consists generally of a heating step, a forming step, a cooling step, and a trimming step.

Unlike conventional press forming that is carried out in a cold state, the hot stamping process is mostly performed at high temperatures of 900 °C or higher, and thus generally uses plated steel sheets coated with aluminum (Al) alloys to ensure the high-temperature stability of the body components and to treat their surfaces. Of Al alloys, Al-Si, Al-Cu, Al-Zn alloys, or the like have good mechanical properties such as fluidity, shrinkage during solidification, and corrosion resistance, and thus are used widely as structural castings and coating materials for aircraft, automobiles, or the like and are also used widely as materials for hot stamping.

On the other hand, when high-temperature heat treatment is performed in the heating step using a heating furnace during the hot stamping process, a reaction occurs in which moisture in the air decomposes and produces hydrogen. In this case, as in Patent Document 1 (Korean Patent Application Publication No. 2012-0134709), a plated steel sheet obtained by plating hot stamping steel with aluminum-silicon (Al-Si) is transformed into a liquid phase due to its low melting point during high-temperature heat treatment, and a large amount of hydrogen flows in from the surface. Thereafter, when cooled down through a cooling step, the hydrogen that has flowed into the material is trapped as the plated layer is transformed into an Al-Fe intermetallic compound layer. At this time, the hydrogen that has flowed in gathers in one place over time, which results in hydrogen embrittlement. Therefore, in order to solve such a problem, there is a need for a hot stamping component that suppresses hydrogen embrittlement and has ultra-high strength.

**SUMMARY**

TECHINCL OBJECTS

It is an object of the present disclosure to provide a hot stamping component with hydrogen embrittlement suppressed and having ultra-high strength, and a method of manufacturing the same.

TECHNICAL SOLUTION

In order to achieve the above object, a hot stamping component of the present disclosure includes a steel sheet; and a plating layer formed on at least one surface of the steel sheet, satisfying General Formula 1 below, and containing zinc.

[General Formula 1]

$$10^5 \sqrt{\sum_{k=1}^{n} L_k \left( \sum_{k=1}^{n} \frac{L_k}{D_k} \right)^{-1}} \, t < 3$$

(In General Formula 1 above, when the plating layer consists of n layers with distinct structures, $L_k$ is an average thickness ($\mu$m) measured along a short axis direction at ten random locations in a k-th layer of the plating layer observed in an SEM image, $D_k$ is a value (m²/s) derived through Electrochemical Hydrogen Permeation Experiment Method as specified below, t is a total heating time (sec) during hot stamping, and n is an integer greater than or equal to 2.)

<Electrochemical Hydrogen Permeation Experiment Method>

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and a thickness of the specimen is defined as $D_k$.

[General Formula 2]

$$\frac{L_{sample}^{2}}{15.3 t_{sample}}$$

(In General Formula 2 above, $L_{sample}$ is the thickness (m) of the specimen, and $t_{sample}$ is a time (sec) it takes to permeate the specimen.)

In addition, the plating layer may satisfy General Formula 3 below.

[General Formula 3]

$$10^5 \sqrt{\sum_{k=1}^{n} L_k \left( \sum_{k=1}^{n} \frac{L_k}{D_k} \right)^{-1}} \, t < 1.7$$

(In General Formula 3 above, when the plating layer consists of n layers with distinct structures, $L_k$ is an average thickness ($\mu$m) measured along a short axis direction at ten random locations in a k-th layer of the plating layer observed in an SEM image, $D_k$ is a value ($m^2/s$) derived through Electrochemical Hydrogen Permeation Experiment Method below, t is a total heating time (sec) during hot stamping, and n is an integer greater than or equal to 2.)

< Electrochemical Hydrogen Permeation Experiment Method >

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and a thickness of the specimen is defined as $D_k$.

[General Formula 2]

$$\frac{L_{sample}^{2}}{15.3 t_{sample}}$$

(In General Formula 2 above, $L_{sample}$ is the thickness (m) of the specimen, and $t_{sample}$ is a time (sec) it takes to permeate the specimen.)

In addition, the plating layer may satisfy General Formula 4 below.

[General Formula 4]

$$0.84 \leq 10^{5} \sqrt{\sum_{k=1}^{n} L_k \left(\sum_{k=1}^{n} \frac{L_k}{D_k}\right)^{-1} t} < 1.7$$

(In General Formula 4 above, when the plating layer consists of n layers with distinct structures, $L_k$ is an average thickness ($\mu$m) measured along a short axis direction at ten random locations in a k-th layer of the plating layer observed in an SEM image, $D_k$ is a value ($m^2$/s) derived through Electrochemical Hydrogen Permeation Experiment Method below, t is a total heating time (sec) during hot stamping, and n is an integer greater than or equal to 2.)

< Electrochemical Hydrogen Permeation Experiment Method >

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and a thickness of the specimen is defined as $D_k$.

[General Formula 2]

$$\frac{L_{sample}^{2}}{15.3 t_{sample}}$$

(In General Formula 2 above, $L_{sample}$ is the thickness (m) of the specimen, and $t_{sample}$ is a time (sec) it takes to permeate the specimen.)

Further, the hot stamping component may be a component manufactured by hot stamping a plated steel sheet having a plating layer containing zinc formed on at least one surface of a steel sheet.

Moreover, the hot stamping may include a heating step of preparing the plated steel sheet having the plating layer containing zinc formed on at least one surface of the steel sheet and heating the prepared plated steel sheet; a forming step of stamping the heated plated steel sheet with press dies and forming a formed body; and a cooling step of cooling the formed body.

Furthermore, when the plated steel sheet prepared in the heating step is heated, the plated steel sheet may be heated at an average temperature increase rate of 3 °C/s to 8 °C/s in a temperature interval of 600 °C to 700 °C.

In addition, when the plated steel sheet prepared in the heating step is heated, the plated steel sheet may be heated at an average temperature increase rate of 0.5 °C/s to 3 °C/s in a temperature interval of 800 °C to X °C. In this case, the X °C is equal to a highest temperature at which the plated steel sheet is heated in the heating step minus 10 °C.

Further, a total heating time during the hot stamping may be 150 seconds to 450 seconds.

Moreover, the plating layer may have a thickness of 10 μm to 30 μm.

In addition, a method of manufacturing a hot stamping component of the present disclosure relates to a manufacturing method of manufacturing a hot stamping component including a steel sheet and a plating layer formed on at least one surface of the steel sheet, satisfying General Formula 1 below, and containing zinc, and includes a heating step of preparing a plated steel sheet having the plating layer containing zinc formed on at least one surface of the steel sheet and heating the prepared plated steel sheet; a forming step of stamping the heated plated steel sheet with press dies and forming a formed body; and a cooling step of cooling the formed body.

[General Formula 1]

$$10^5 \sqrt{\sum_{k-1}^{n} L_k \left( \sum_{k-1}^{n} \frac{L_k}{D_k} \right)^{-1} t} < 3$$

(In General Formula 1 above, when the plating layer consists of n layers with distinct structures, $L_k$ is an average thickness (μm) measured along a short axis direction at ten random locations in a k-th layer of the plating layer observed in an SEM image, $D_k$ is a value (m²/s) derived through Electrochemical Hydrogen Permeation Experiment Method below, t is a total heating time (sec) during hot stamping, and n is an integer greater than or equal to 2.)

<Electrochemical Hydrogen Permeation Experiment Method>

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and a thickness of the specimen is defined as $D_k$.

[General Formula 2]

$$\frac{L_{sample}^{2}}{15.3 t_{sample}}$$

(In General Formula 2 above, $L_{sample}$ is the thickness (m) of the specimen, and $t_{sample}$ is a time (sec) it takes to permeate the specimen.)

Further, when the plated steel sheet prepared in the heating step is heated, the plated steel sheet may be heated at an average temperature increase rate of 3 °C/s to 8 °C/s in a temperature interval of 600 °C to 700 °C.

Moreover, when the plated steel sheet prepared in the heating step is heated, the plated steel sheet may be heated at an average temperature increase rate of 0.5 °C/s to 3 °C/s in a temperature interval of 800 °C to X °C. In this case, the X °C is equal to a highest temperature at which the plated steel sheet is heated in the heating step minus 10 °C.

Furthermore, the plating layer formed on the plated steel sheet prepared in the heating step may include a zeta layer, a delta layer, and a gamma layer.

EFFECTS OF THE DISCLOSURE

According to the hot press component and the method of manufacturing the same of the present disclosure, a hot press component with hydrogen embrittlement suppressed and having ultra-high strength can be obtained.

**BRIEF DESCRIPTION OF THE DRAWINGS**

FIG. 1 is a diagram showing, by way of example, a hot stamping component according to one embodiment of the present disclosure;

FIG. 2 is an image photographed with a scanning electron microscope at the highest heating temperature of a hot stamping component manufactured in Embodiment 2; and

FIGS. 3 to 5 are images obtained by photographing fracture experiment evaluation results of hot stamping components manufactured in Embodiment 2, Comparative Example 1, and Comparative Example 2, respectively, with a camera.

**DETAILED DESCRIPTION OF EMBODIMENTS**

Hereinafter, a hot stamping component of the present disclosure will be described with reference to the accompanying drawings, which are illustrative, and the hot stamping component of the present disclosure is not limited to the accompanying drawings.

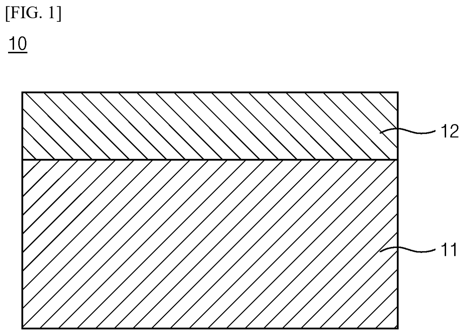

FIG. 1 is a diagram showing, by way of example, a hot stamping component according to one embodiment of the present disclosure. As shown in FIG. 1, the hot stamping component 10 of the present disclosure includes a steel sheet 11 and a plating layer 12. According to the hot stamping component 10 of the present disclosure, hydrogen embrittlement can be suppressed and ultra-high strength can be achieved.

The steel sheet 11 refers to a sheet made of steel used for automobile bodies. For example, the steel sheet 11 may contain carbon (C), silicon (Si), manganese (Mn), phosphorus (P), sulfur (S), boron (B), the balance iron (Fe), and other unavoidable impurities. Specifically, the steel sheet 11 may contain 0.1 wt% to 0.5 wt% of carbon (C), 0.1 wt% to 0.8 wt% of silicon (Si), 0.3 wt% to 3.0 wt% of manganese (Mn), greater than 0 wt% to 0.05 wt% of phosphorus (P), greater than 0 wt% to 0.03 wt% of sulfur (S), 0.0005 wt% to 0.005 wt% of boron (B), the balance iron (Fe), and other unavoidable impurities.

In addition, the steel sheet 11 may further contain one or more selected from titanium (Ti) and/or niobium (Nb), chromium (Cr), molybdenum (Mo), and nickel (Ni). Specifically, the steel sheet 11 may further contain titanium (Ti) and/or niobium (Nb) at 0.01 wt% to 0.1 wt%, chromium (Cr) at 0.01 wt% to 1.0 wt%, molybdenum (Mo) at 0.01 wt% to 1.0 wt%, and nickel (Ni) at 0.001 wt% to 1.0 wt%.

The carbon (C) is the main element that determines the strength and hardness of the steel, and may be added after a hot stamping or hot press process for the purpose of ensuring the tensile strength of the steel material. In addition, the carbon (C) may be added for the purpose of ensuring the hardenability properties of the steel material. If the carbon (C) is contained in the steel sheet 11 in an amount less than the content described above, it may be difficult to achieve the desired mechanical strength. On the other hand, if the carbon (C) is contained in the steel sheet 11 in excess of the content described above, a problem of reduced toughness or an embrittlement control problem of the steel sheet may occur.

The silicon (Si) may act as a ferrite stabilizing element in the steel sheet 11. The silicon (Si) may perform the functions of improving ductility by purifying the ferrite, and of improving carbon enrichment in the austenite by suppressing the formation of low-temperature carbides. Furthermore, the silicon (Si) may be a key element in hot rolling, cold rolling, and hot stamping structure homogenization (control of pearlite and manganese segregation zones) and ferrite fine dispersion. If the silicon (Si) is contained in the steel sheet 11 in an amount less than the content described above, the functions described above may not be fully exhibited. On the other hand, if the silicon (Si) is contained in the steel sheet 11 in excess of the content described above, hot rolling and cold rolling loads may increase, hot rolling red scale may become excessive, and bondability may deteriorate.

The manganese (Mn) may be added for the purpose of increasing hardenability and strength during heat treatment. If the manganese (Mn) is contained in the steel sheet 11 in an amount less than the content described above, it is likely that the material quality after hot stamping may be insufficient due to insufficient hardenability, for example, the hard phase fraction may be insufficient. On the other hand, if the manganese (Mn) is contained in the steel sheet 11 in excess of the content described above, the ductility and toughness may decrease due to manganese segregation or pearlite bands, it may serve as a cause for deterioration in bending performance, and inhomogeneous microstructures may occur.

The phosphorus (P) is an element prone to segregation and may be an element that interferes with the toughness of steel. If the phosphorus (P) is contained in the steel sheet 11 in the content described above, the decrease in the toughness of the steel can be prevented. On the other hand, if the phosphorus (P) is contained in the steel sheet 11 in excess of the content described above, cracks may occur during processes, and iron phosphide compounds may be formed, resulting in a decrease in the toughness of the steel.

The sulfur (S) may be an element that interferes with workability and physical properties. If the sulfur (S) is contained in the steel sheet 11 in excess of the content described above, the hot workability may deteriorate, and surface defects such as cracks may occur due to the formation of large inclusions.

The boron (B) may be added for the purpose of ensuring the hardenability and strength of the steel material by ensuring the martensite structure, and can have a grain refinement effect with an increase in the austenite grain growth temperature. If the boron (B) is contained in the steel sheet 11 in the content described above, the occurrence of hard phase grain boundary embrittlement can be prevented and high toughness and bendability can be ensured.

The titanium (Ti) may be added for the purpose of strengthening the hardenability and improving the material quality with the formation of precipitates after hot stamping heat treatment. Further, the titanium (Ti) can effectively contribute to the austenite grain refinement by forming precipitation phases, such as Ti (C, N) at high temperatures.

The niobium (Nb) may be added for the purpose of increasing the strength and toughness with a decrease in the martensite packet size.

The chromium (Cr) may be added for the purpose of improving the hardenability and strength of the steel. If the chromium (Cr) is contained in the steel sheet 11 in the content described above, the hardenability and strength of the steel can be improved, the production cost can be prevented from increasing, and the toughness of the steel material can be prevented from decreasing.

The molybdenum (Mo) can contribute to the improvement of strength by suppressing the coarsening of precipitates during hot rolling and hot stamping and increasing the hardenability. By having the molybdenum (Mo) contained in the steel sheet 11 in the content described above, the effect of suppressing the coarsening of precipitates during hot rolling and hot stamping and increasing the hardenability can be excellent.

The nickel (Ni) may be added for the purpose of ensuring the hardenability and strength. In addition, the nickel (Ni) can contribute to improving the elongation with the control of the austenite transformation as an austenite stabilizing element. If the nickel (Ni) is contained in the steel sheet 11 in an amount less than the content described above, it may be difficult to properly achieve the effects described above. In addition, if the nickel (Ni) is contained in the steel sheet 11 in excess of the content described above, the toughness may decrease, the cold workability may deteriorate, and the manufacturing cost of the product may increase.

In one example, the steel sheet 11 may have a microstructure containing a martensite fraction of 90% or more. Specifically, the steel sheet 11 may have a microstructure containing 90% or more of martensite and less than 10% of the balance of other unavoidable structures and other precipitates. Preferably, the steel sheet 11 may be full martensite. The steel sheet 11 may be able to ensure ultra-high strength by having the microstructure described above.

In addition, the steel sheet 11 can have a tensile strength (TS) of 1,350 MPa or more, for example, 1,680 MPa to 2,300 MPa, a yield stress (YP) of 900 MPa to 1,300 MPa, for example, 1,150 MPa to 1,300 MPa, and an elongation (EL) of 4% to 15%.

The plating layer 12 is a layer to be plated on the surface of the steel sheet 11, is formed on at least one surface of the steel sheet 11, satisfies General Formula 1 below, and contains zinc. In the present specification, the term "surface" refers to an outer face located on one side, both sides, or all sides of the steel sheet. For example, one surface of the steel sheet 11 may be the upper surface of the steel sheet 11.

[General Formula 1]

$$10^5 \sqrt{\sum_{k=1}^{n} L_k \left( \sum_{k=1}^{n} \frac{l_k}{D_k} \right)^{-1} t} < 3$$

(In General Formula 1 above, when the plating layer consists of n layers with distinct structures, $L_k$ is the average thickness ($\mu$m) measured along the short axis direction at ten random locations in the k-th layer of the plating layer observed in the SEM image, $D_k$ is the value ($m^2$/s) derived through Electrochemical Hydrogen Permeation Experiment Method below, t is the total heating time (sec) during hot stamping, and n is an integer greater than or equal to 2.)

< Electrochemical Hydrogen Permeation Experiment Method >

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and thickness of the specimen is defined as $D_k$.

[General Formula 2]

$$\frac{L_{sample}^{2}}{15.3 t_{sample}}$$

(In General Formula 2 above, $L_{sample}$ is the thickness (m) of the specimen, and $t_{sample}$ is the time (sec) it takes to permeate the specimen.)

By satisfying General Formula 1 above, the plating layer 12 can suppress the amount of diffusible hydrogen to less than 0.5 ppm, and can thus suppress hydrogen embrittlement of the hot stamping component and have ultra-high strength. On the other hand, if the plating layer 12 does not satisfy General Formula 1 above, the amount of hydrogen flowing into the steel sheet of the hot stamping component, i.e., the amount of diffusible hydrogen, may increase, resulting in higher hydrogen embrittlement.

In the present specification, the term "k-th layer of the plating layer" refers to the layer that corresponds to the k-th in the thickness direction from the surface of the plating layer toward the steel sheet. For example, if n=3, the k-th layer of the plating layer can be the first layer, the second layer, or the third layer. Further, in the present specification, the term "short axis direction" refers to the stacking direction in which the steel sheet and the plating layer are stacked based on the hot stamping component.

In another example, the plating layer 12 can satisfy General Formula 3 below.

[General Formula 3]

$$10^{5} \sqrt{\sum_{k=1}^{n} L_k \left( \sum_{k=1}^{n} \frac{L_k}{D_k} \right)^{-1} t} < 1.7$$

(In General Formula 3 above, when the plating layer consists of n layers with distinct structures, $L_k$ is the average thickness ($\mu$m) measured along the short axis direction at ten random locations in the k-th layer of the plating layer observed in the SEM image, $D_k$ is the value (m²/s) derived through Electrochemical Hydrogen Permeation Experiment Method below, t is the total heating time (sec) during hot stamping, and n is an integer greater than or equal to 2.)

< Electrochemical Hydrogen Permeation Experiment Method >

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and thickness of the specimen is

defined as $D_k$.

[General Formula 2]

$$\frac{{L_{sample}}^2}{15.3\, t_{sample}}$$

(In General Formula 2 above, $L_{sample}$ is the thickness (m) of the specimen, and $t_{sample}$ is the time (sec) it takes to permeate the specimen.)

By satisfying General Formula 3 above, the plating layer 12 can suppress the amount of diffusible hydrogen to less than 0.1 ppm, and can thus further suppress hydrogen embrittlement of the hot stamping component and have ultra-high strength. On the other hand, if the plating layer 12 exceeds the upper limit of General Formula 3 above, the amount of hydrogen flowing into the steel sheet of the hot stamping component may increase, resulting in higher hydrogen embrittlement.

In yet another example, the plating layer 12 can satisfy General Formula 4 below.

[General Formula 4]

$$0.84 \leq 10^5 \sqrt{\sum_{k=1}^{n} L_k \left( \sum_{k=1}^{n} \frac{L_k}{D_k} \right)^{-1} t} < 1.7$$

(In General Formula 4 above, when the plating layer consists of n layers with distinct structures, $L_k$ is the average thickness ($\mu$m) measured along the short axis direction at ten random locations in the k-th layer of the plating layer observed in the SEM image, $D_k$ is the value ($m^2$/s) derived through Electrochemical Hydrogen Permeation Experiment Method below, t is the total heating time (sec) during hot stamping, and n is an integer greater than or equal to 2.)

< Electrochemical Hydrogen Permeation Experiment Method >

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and thickness of the specimen is defined as $D_k$.

[General Formula 2]

$$\frac{{L_{sample}}^2}{15.3\, t_{sample}}$$

(In General Formula 2 above, $L_{sample}$ is the thickness (m) of the specimen, and $t_{sample}$ is the time (sec) it takes to permeate the specimen.)

By satisfying General Formula 4 above, the plating layer 12 can suppress hydrogen embrittlement of the hot stamping component even further and have ultra-high strength. On the other hand, if the plating layer 12 exceeds the upper limit of General Formula 4 above, the amount of hydrogen flowing into the steel sheet of the hot stamping component may increase, resulting in higher hydrogen embrittlement. In addition, if the plating layer 12 is less than the lower limit of General Formula 4 above, the total heating time may get shorter significantly or the thickness of the plating layer 12 may get thinner substantially, and accordingly, the targeted material quality may not be ensured or the corrosion resistance may deteriorate.

The plating layer 12 may be a zinc-based plating layer containing zinc, as described above. For example, a galvanized steel sheet having the zinc-based plating layer formed on the steel sheet may be at least one or more of a galvanized iron (GI) sheet, an electro-galvanized iron (EGI) sheet, and a galva-annealed iron (GA) sheet. Specifically, the plating layer 12 may contain iron (Fe), aluminum (Al), manganese (Mn), the balance zinc (Zn), and other unavoidable impurities. More specifically, the plating layer 12 may contain 10 wt% to 70 wt% of iron (Fe), 0 to 5 wt% of aluminum (Al), 0 to 1 wt% of manganese (Mn), the balance zinc (Zn), and other unavoidable impurities. As the plating layer 12 is formed of a zinc-based plating layer containing the composition described above, the hot stamping component can have ultra-high strength.

The plating layer 12 may have a thickness of 10 $\mu$m to 30 $\mu$m. By having the thickness described above, the plating layer 12 can protect the surface of the steel sheet 11 and at the same time, prevent or minimize the decrease in the toughness of the hot stamping component 10, and can satisfy General Formula 1, General Formula 3, or General Formula 4 described above, and accordingly, can suppress the hydrogen embrittlement of the hot stamping component 10 and allow the hot stamping component 10 to have ultra-high strength. If the thickness of the plating layer 12 is less than the lower limit described above, the effectiveness of the zinc-specific sacrificial method may decrease, and the hot stamping component 10 may not satisfy General Formula 1, General Formula 3, or General Formula 4 described above. In addition, if the thickness of the plating layer 12 exceeds the upper limit described above, the toughness of the hot stamping component 10 including the plating layer 12 may decrease.

In one example, the hot stamping component 10 may be a component manufactured by hot stamping a plated steel sheet (not shown) having the plating layer containing zinc formed on at least one surface thereof.

Specifically, the hot stamping suitably may include a heating step, a forming step, and a cooling step.

The heating step may be a step of preparing a plated steel sheet having the plating layer containing zinc formed on at least one surface of the steel sheet 11, and heating the prepared plated steel sheet, and may be performed via a heating furnace having a particular temperature range. For example, the temperature range of the heating furnace may be Ac1 to 950 °C, specifically, Ac3 to 950 °C or 860 °C to 920 °C.

In one example, when the plated steel sheet prepared in the heating step is heated, the plated steel sheet may be heated at an average temperature increase rate of 3 °C/s to 8 °C/s in a temperature interval of 600 °C to 700 °C. Specifically, the plated steel sheet may be heated at an average temperature increase rate of 4 °C/s to 7 °C/s or 5 °C/s to 6 °C/s in the temperature interval described above. By being heated at the average temperature increase rate described above in the temperature interval described above, the plated steel sheet can satisfy General Formula 1, General Formula 3, or General Formula 4 described above, and accordingly, a hot stamping component with hydrogen embrittlement suppressed and having ultra-high strength can be obtained.

In another example, when the plated steel sheet prepared in the heating step is heated, the plated steel sheet may be heated at an average temperature increase rate of 0.5 °C/s to 3 °C/s in a temperature interval of 800 °C to X °C. In this case, the X °C is equal to the highest temperature at which the plated steel sheet is heated in the heating step minus 10 °C. For example, if the highest temperature at which the plated steel sheet is heated is 860 °C to 920 °C, the X °C can be 850 °C to 910 °C. By being heated at the average temperature increase rate described above in the temperature interval described above, the plated steel sheet can satisfy General Formula 1, General Formula 3, or General Formula 4 described above, and accordingly, a hot stamping component with hydrogen embrittlement suppressed and having ultra-high strength can be obtained.

The total heating time during the hot stamping, i.e., the total heating time in the heating step, may be 150 seconds to 450 seconds. Specifically, the total heating time during the hot stamping may be 165 seconds to 410 seconds, 180 seconds to 370 seconds, 195 seconds to 330 seconds, 210 seconds to 290 seconds, or 225 seconds to 240 seconds. By heating the plated steel sheet for the heating time described above during the hot stamping, General Formula 1, General Formula 3, or General Formula 4 described above can be satisfied, and accordingly, a hot stamping component with hydrogen embrittlement suppressed and having ultra-high strength can be obtained.

The forming step may be a step of forming the plated steel sheet heated in the heating step into a formed body, and may be performed by stamping with press dies. For example, in the forming step, the forming start temperature may be 500 °C to 700 °C. If the forming start temperature in the forming step satisfies the range described above, the formability of the plated steel sheet can be improved, the manufactured hot stamping component 10 can have the targeted structure and physical properties, and the occurrence of wrinkles or bends on the surface of the manufactured hot stamping component 10 can be prevented or minimized. On the other hand, if the forming start temperature in the forming step is below the range described above, the formability of the plated steel sheet may decrease, and the manufactured hot stamping component 10 may not have the targeted structure and physical properties. In addition, if the forming start temperature in the forming step exceeds the range described above, wrinkles or bends may occur on the surface of the manufactured hot stamping component 10, and the plating layer 12 may adhere to the dies.

The cooling step is a step of cooling the formed body formed in the forming step. The cooling step may be performed in press dies that presses the plated steel sheet.

Specifically, the formed body can be cooled at the same time as being formed into a final component shape in the press dies, thereby forming a final product. The dies may be provided with a cooling channel through which a refrigerant circulates. The formed body can be cooled rapidly by the circulation of the refrigerant supplied through the cooling channel provided in the dies. At this time, in order to prevent the spring-back phenomenon of the sheet material and maintain the desired shape, rapid cooling may be performed while pressing with the dies closed. In performing the forming and cooling operation on the formed body, the average cooling rate may be maintained at 10 °C or higher up to the martensite transformation end temperature Mf. If the cooling end temperature in the cooling step satisfies the range described above, the productivity of the manufacturing process can be improved, and the occurrence of warping in the manufactured hot stamping component 10 can be prevented or minimized. On the other hand, the cooling end temperature at which the cooling step ends may be 25 °C to 200 °C. If the cooling end temperature in the cooling step is below the range described above, the productivity of the manufacturing process may decrease. In addition, if the cooling end temperature in the cooling step exceeds the range described above, warping may occur in the hot stamping component 10, and it may be difficult to ensure the targeted material quality.

The present disclosure also relates to a method of manufacturing a hot stamping component. The method of manufacturing a hot stamping component relates to a method of manufacturing the hot stamping component described above, and specific details of the hot stamping component described below will be omitted since the contents described in the hot stamping component can be applied in a like manner.

The method of manufacturing a hot stamping component of the present disclosure relates to a method of manufacturing a hot stamping component including a steel sheet and a plating layer formed on at least one surface of the steel sheet, satisfying General Formula 1 below, and containing zinc, and includes a heating step, a forming step, and a cooling step.

[General Formula 1]

$$10^5 \sqrt{\sum_{k=1}^{n} L_k \left( \sum_{k=1}^{n} \frac{L_k}{D_k} \right)^{-1}} \, t < 3$$

(In General Formula 1 above, when the plating layer consists of n layers with distinct structures, $L_k$ is the average thickness ($\mu$m) measured along the short axis direction at ten random locations in the k-th layer of the plating layer observed in the SEM image, $D_k$ is the value (m$^2$/s) derived through Electrochemical Hydrogen Permeation Experiment Method below, t is the total heating time (sec) during hot stamping, and n is an integer greater than or equal to 2.)

< Electrochemical Hydrogen Permeation Experiment Method >

- A specimen formed of the k-th layer is placed in the middle of two cells, and hydrogen is electrically generated in one cell and is made to permeate to the other cell.
- The time it takes for hydrogen to permeate to the other cell is measured.
- The value calculated by General Formula 2 below by using the measured time and thickness of the specimen is defined as $D_k$.

[General Formula 2]

$$\frac{L_{sample}^{2}}{15.3 t_{sample}}$$

(In General Formula 2 above, $L_{sample}$ is the thickness (m) of the specimen, and $t_{sample}$ is the time (sec) it takes to permeate the specimen.)

The specific description of the configuration of and method of manufacturing the hot stamping component is the same as that described above in the hot stamping, and will thus be omitted. The hot stamping component manufactured by the method of manufacturing a hot stamping component can suppress hydrogen embrittlement and have ultra-high strength by satisfying General Formula 1 described above.

The entire plating layer formed on the plated steel sheet prepared in the heating step may contain 10 wt% to 70 wt% of iron (Fe) and the balance of zinc (Zn) and other unavoidable impurities.

The thickness of the plating layer formed on the plated steel sheet prepared in the heating step may be 5 μm to 20 μm, specifically, 8 μm to 18 μm or 10 μm to 15 μm. By having the thickness described above, the plating layer formed on the plated steel sheet prepared in the heating step can protect the surface of the steel sheet, and at the same time, prevent or minimize the decrease in the toughness of the hot stamping component manufactured according to the manufacturing method described above. If the thickness of the plating layer formed on the plated steel sheet prepared in the heating step is less than the range described above, the effectiveness of the zinc-specific sacrificial method may decrease. In addition, if the thickness of the plating layer formed on the plated steel sheet prepared in the heating step exceeds the range described above, the toughness of the hot stamping component manufactured according to the manufacturing method described above and including the plating layer may decrease.

In one example, the plating layer formed on the plated steel sheet prepared in the heating step may include a zeta layer, a delta layer, and a gamma layer after alloying by including the composition described above.

As the plated steel sheet prepared in the heating step includes the layers described above, the hot stamping component manufactured through the method of manufacturing a hot stamping component can satisfy General Formula 1, General Formula 3, or General Formula 4 above, and accordingly, can suppress hydrogen embrittlement and have ultra-high strength. The stacking order of the zeta layer, the delta layer, and the gamma layer in the plating layer formed on the plated steel sheet prepared in the heating step is not particularly limited. For example, the plating layer formed on the plated steel sheet prepared in the heating step may include the zeta layer, the delta layer, and the gamma layer in order along the thickness direction from the surface toward the steel sheet.

The zeta layer is a layer exhibiting a zeta phase, and may contain 3 wt% to 8 wt% of iron (Fe) and the balance of zinc (Zn) and other unavoidable impurities.

The thickness of the zeta layer may be greater than 0 to 4 μm, and specifically, greater than 0 to 3 μm or greater than 0 to 2 μm. As the zeta layer has the thickness described above, it may be more advantageous for the hot stamping component to satisfy General Formula 1, General Formula 3, or General Formula 4 above.

The delta layer is a layer exhibiting a delta phase, and may contain 8 wt% to 12 wt% of iron (Fe) and the balance of zinc (Zn) and other unavoidable impurities.

The thickness of the delta layer may be greater than 3 μm to 10 μm, specifically, greater than 6 μm to 10 μm or greater than 8 μm to 9 μm. As the delta layer has the thickness described above, it may be more advantageous for the hot stamping component to satisfy General Formula 1, General Formula 3, or General Formula 4 above.

The gamma layer is a layer exhibiting a gamma phase, and may contain 19 wt% to 32 wt% of iron (Fe) and the balance of zinc (Zn) and other unavoidable impurities.

The thickness of the gamma layer may be 1 μm to 6 μm, specifically, 1 μm to 5 μm or 1 μm to 4 μm. As the gamma layer has the thickness described above, it may be more advantageous for the hot stamping component to satisfy General Formula 1, General Formula 3, or General Formula 4 above.

In one example, with a method of manufacturing a plated steel sheet having a plating layer including layers consisting of the structures described above on the steel sheet, a galvanized steel sheet having the plating layer including the layers consisting of the structures described above formed on the steel sheet may be manufactured by immersing the steel sheet in a plating bath, and the galvanized steel sheet may be alloyed, thereby manufacturing a galva-annealed steel sheet. At this time, the plating bath may contain components of less than 0.3 wt% of aluminum, less than 0.1 wt% of iron, the balance zinc, and other unavoidable impurities. The plating layer may adhere to both sides of the steel sheet with a thickness of 10 μm to 15 μm, respectively. In addition, the difference between the temperature of the steel sheet immediately before the alloying and the alloying temperature may be 80 °C or more. As the difference between the temperature of the steel sheet immediately before the alloying and the alloying temperature satisfies the range described above, the zeta layer, the delta layer, and the gamma layer can be secured in the plating layer formed on the steel sheet, the thickness of the plating layer described above can be satisfied, and thus, General Formula 1, General Formula 3, or General Formula 4 can be satisfied, thereby allowing for obtaining a hot stamping component with hydrogen embrittlement suppressed and having ultra-high strength.

In one example, when the plated steel sheet prepared in the heating step is heated, the steel sheet may be heated at an average temperature increase rate of 3 °C/s to 8 °C/s in a temperature interval of 600 °C to 700 °C. When the plated steel sheet prepared in the heating step is heated, a specific description of the average temperature increase rate of the steel sheet in the temperature interval described above is the same as that described above in the hot stamping, and will thus be omitted.

In addition, when the plated steel sheet prepared in the heating step is heated, the plated steel sheet may be heated at an average temperature increase rate of 0.5 °C/s to 3 °C/s in a temperature interval of 800 °C to 900 °C. When the plated steel sheet prepared in the heating step is heated, a specific description of the average temperature increase rate of the plated steel sheet in the temperature interval described above is the same as that described above in the hot stamping, and will thus be omitted.

In the following, the present disclosure will be described in more detail through various embodiments and comparative examples, but the scope of the present disclosure is not limited by the embodiments presented below.

**Embodiment 1**

**<u>Manufacture of Hot Stamping Component</u>**

By immersing a steel sheet having a sheet thickness of 1.2 mm and consisting of 0.29 wt% of carbon, 0.2 wt% of silicon, 1.5 wt% of manganese, 0.02 wt% or less of phosphorus, 0.015 wt% or less of sulfur, 0.2 wt% of chromium, 0.0025 wt% of boron, 0.035 wt% of titanium, the balance iron, and other unavoidable impurities in a plating bath, a galva-annealed steel sheet was prepared in which a plating layer consisting of a zeta layer, a delta layer, and a gamma layer was formed on both the upper and lower surfaces of the steel sheet along the thickness direction from the surface to the steel sheet. At this time, the galva-annealing was formed by adjusting the amount of plating adhesion with an air knife after the steel sheet was immersed in the plating bath, and then alloying, so that the average thickness of the plating layer was made to be 12 $\mu$m. Specifically, the composition of the plating bath was made to include 0.13 wt% of aluminum, 0.06 wt% of iron, the balance zinc, and other unavoidable impurities, and the temperature of the plating bath was set to 450 °C. In addition, the steel sheet was passed through the plating bath at a speed of 120 mpm to thereby cause the molten zinc to adhere to both the upper and lower surfaces of the steel sheet, and then was loaded into a galva-annealing furnace at 530 °C, so that the iron atoms constituting the steel sheet were diffused into the plating layer to thus cause the steel sheet and the molten zinc to be alloyed, thereby manufacturing a galva-annealed steel sheet. At this time, by adjusting the position of the galva-annealing furnace so that the temperature of the steel sheet immediately before being loaded into the galva-annealing furnace was 420 °C, the temperature difference between the steel sheet and the galva-annealing furnace was set to 80 °C or greater. The time lasted at the alloying temperature, i.e., the alloying time, was set to 30 seconds.

Then, the manufactured plated steel sheet was prepared, and the prepared plated steel sheet was heated for 450 seconds in a heating furnace with a highest temperature of 900 °C. At this time, a multi-stage temperature increase-type heating furnace configured to include a plurality of heating zones in which the temperature increased step-wise from the inlet side where the plated steel sheet was loaded toward the outlet side where the heated plated steel sheet was removed was used as the heating furnace, thereby controlling the temperature of the heating furnace in each heating zone so that the plated steel sheet was heated at an average temperature increase rate of 7.20 °C/s in the temperature interval where it was heated from 600 °C to 700 °C and at an average temperature increase rate of 2.22 °C/s in the temperature interval where it was heated from 800 °C to 890 °C.

Then, the heated plated steel sheet was stamped with a press to thus form a formed body, and at the same time, was cooled rapidly at an average cooling rate of 10 °C/s down to 300 °C or lower, thereby manufacturing a hot stamping component. The physical properties of the manufactured hot stamping component are shown in Table 1 below.

**Embodiment 2**

**<u>Manufacture of Hot Stamping Component</u>**

A hot stamping component was manufactured in the same manner as in Embodiment 1, except that the average temperature increase rate in the temperature interval where the heating was carried out from 600 °C to 700 °C was 5.20 °C/s and the average temperature increase rate in the temperature interval where the heating was carried out from 800 °C to 890 °C was 1.21 °C/s. The physical properties of the manufactured hot stamping component are shown in Table 1 below.

**Embodiment 3**

**Manufacture of Hot Stamping Component**

A hot stamping component was manufactured in the same manner as in Embodiment 1, except that the average temperature increase rate in the temperature interval where the heating was carried out from 600 °C to 700 °C was 4.10 °C/s and the average temperature increase rate in the temperature interval where the heating was carried out from 800 °C to 890 °C was 0.86 °C/s. The physical properties of the manufactured hot stamping component are shown in Table 1 below.

**Embodiment 4**

**Manufacture of Hot Stamping Component**

A hot stamping component was manufactured in the same manner as in Embodiment 1, except that the average temperature increase rate in the temperature interval where the heating was carried out from 600 °C to 700 °C was 3.00 °C/s and the average temperature increase rate in the temperature interval where the heating was carried out from 800 °C to 890 °C was 0.53 °C/s. The physical properties of the manufactured hot stamping component are shown in Table 1 below.

**Comparative Example 1**

**Manufacture of Hot Stamping Component**

A hot stamping component was manufactured in the same manner as in Embodiment 1, except that the average temperature increase rate in the temperature interval where the heating was carried out from 600 °C to 700 °C was 3.50 °C/s and the average temperature increase rate in the temperature interval where the heating was carried out from 800 °C to 890 °C was 0.30 °C/s. The physical properties of the manufactured hot stamping component are shown in Table 1 below.

**Comparative Example 2**

**Manufacture of Hot Stamping Component**

A hot stamping component was manufactured in the same manner as in Embodiment 1, except that the average temperature increase rate in the temperature interval where the heating was carried out from 600 °C to 700 °C was 2.91 °C/s and the average temperature increase rate in the temperature interval where the heating was carried out from 800 °C to 890 °C was 0.52 °C/s. The physical properties of the manufactured hot stamping component are shown in Table 1 below.

**Comparative Example 3**

**Manufacture of Hot Stamping Component**

A hot stamping component was manufactured in the same manner as in Embodiment 1, except that the average temperature increase rate in the temperature interval where the heating was carried out from 600 °C to 700 °C was 2.98 °C/s and the average temperature increase rate in the temperature interval where the heating was carried out from 800 °C to 890 °C was 0.45 °C/s. The physical properties of the manufactured hot stamping component are shown in Table 1 below.

**Evaluation Example 1. Shape Analysis and Evaluation of Plating Layer**

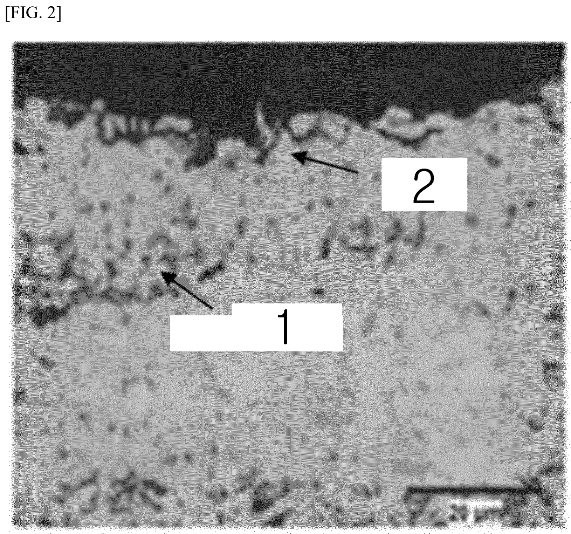

The plating layers of the hot stamping components manufactured in the embodiments and the comparative examples were photographed with a scanning electron microscope (SEM), and the results are shown in Table 1, respectively. In particular, the image obtained by photographing the plating layer of the hot stamping component manufactured in Embodiment 2 with a scanning electron microscope is shown in FIG. 2. In this case, the structures formed in the plating layer are labeled in the order of thickness direction from the surface toward the steel sheet.

**Evaluation Example 2. Evaluation of Electrochemical Hydrogen Permeation Experiment**

The structure of each layer (n layers) formed in the plating layer in the hot stamping components manufactured in the embodiments and the comparative examples was identified, each specimen consisting of each structure was manufactured, each manufactured specimen was placed in the middle of two cells, hydrogen was electrically generated in one cell, and the hydrogen was made to permeate to the other cell. Then, the time it took for the hydrogen to permeate to the other cell was measured. The $D_k$ value calculated by General Formula 2 below was obtained using the measured time and the thickness of the specimen.

The specimens of the embodiments and the comparative examples had $D_k$ values, calculated by General Formula 2 below, of $8 \times 10^{-14}$ m²/s to $8 \times 10^{-11}$ m²/s, respectively.

[General Formula 2]

$$\frac{L_{sample}^2}{15.3 t_{sample}}$$

(In General Formula 2 above, $L_{sample}$ is the thickness (m) of the specimen, and $t_{sample}$ is the time (sec) it took to permeate the specimen.)

**Evaluation Example 3. Evaluating Whether General Formula 3 is Satisfied**

By using the results of Evaluation Examples 1 and 2 above, whether the hot stamping components manufactured in the embodiments and the comparative examples satisfied General Formula 3 below was evaluated, and the results are shown in Table 1 below.

[General Formula 3]

$$10^5 \sqrt{\sum_{k=1}^{n} L_k \left( \sum_{k=1}^{n} \frac{L_k}{D_k} \right)^{-1} t} < 1.7$$

(In General Formula 3 above, when the plating layer consists of n layers with distinct structures, $L_k$ is the average thickness ($\mu$m) measured along the short axis direction at ten random locations in the k-th layer of the plating layer observed in the SEM image, $D_k$ is the value (m²/s) derived through Electrochemical Hydrogen Permeation Experiment Method below, t is the total heating time (sec) during hot stamping, and n is an integer greater than or equal to 2.)

[Table 1]

| | | Structures contained in the plating layer | $L_k$ ($\mu$m) | Left-hand side value of General Formula 3 |
|---|---|---|---|---|
| Embodiment 1 | | Gamma layer | 1 | 1.43 |
| | | Alpha iron layer | 29 | |
| Embodiment 2 | | Gamma layer (2) | 2 | 1.46 |
| | | Alpha iron layer (1) | 23 | |
| Embodiment 3 | | Gamma layer | 9 | 1.67 |
| | | Alpha iron layer | 19 | |
| Embodiment 4 | | Gamma layer | 10 | 1.68 |
| | | Alpha iron layer | 20 | |
| Comparative Example 1 | | Gamma layer | 14 | 1.78 |
| | | Alpha iron layer | 19 | |

(continued)

|  | Structures contained in the plating layer | $L_k$ ($\mu$m) | Left-hand side value of General Formula 3 |
|---|---|---|---|
| Comparative Example 2 | Gamma layer | 11 | 1.71 |
|  | Alpha iron layer | 20 | |
| Comparative Example 3 | Gamma layer | 12 | 1.72 |
|  | Alpha iron layer | 21 | |

As shown in Table 1 above, it was confirmed that the hot stamping components manufactured in Embodiments 1 to 4 satisfied General Formula 3. In contrast, it was confirmed that the hot stamping components manufactured in Comparative Examples 1 to 3 did not satisfy General Formula 3.

**Evaluation Example 4. Hydrogen Embrittlement Evaluation**

The amount of diffusible hydrogen for the hot stamping components manufactured in each of the embodiments and the comparative examples was measured using the thermal desorption spectroscopy method. Specifically, the amount of hydrogen released from the hot stamping components manufactured in each of the embodiments and the comparative examples was measured at 350 °C or lower while increasing the temperature from room temperature ($\pm$20 °C) to 500 °C at a heating rate of 20 °C for the hot stamping components manufactured in each of the embodiments and the comparative examples, and the results are shown in Table 2 below.

[Table 2]

|  | Amount of diffusible hydrogen (ppm) |
|---|---|
| Embodiment 1 | 0.025 |
| Embodiment 2 | 0.034 |
| Embodiment 3 | 0.059 |
| Embodiment 4 | 0.058 |
| Comparative Example 1 | 0.423 |
| Comparative Example 2 | 0.412 |
| Comparative Example 3 | 0.497 |

As shown in Table 2 above, it was confirmed that the hot stamping components manufactured in Embodiments 1 to 4 had an amount of diffusible hydrogen of less than 0.1 ppm, which was significantly less than the amount of diffusible hydrogen of the hot stamping components manufactured in Comparative Examples 1 to 3, and accordingly that hydrogen embrittlement could be suppressed.

**Evaluation Example 5. Evaluation of Fracture Experiment**

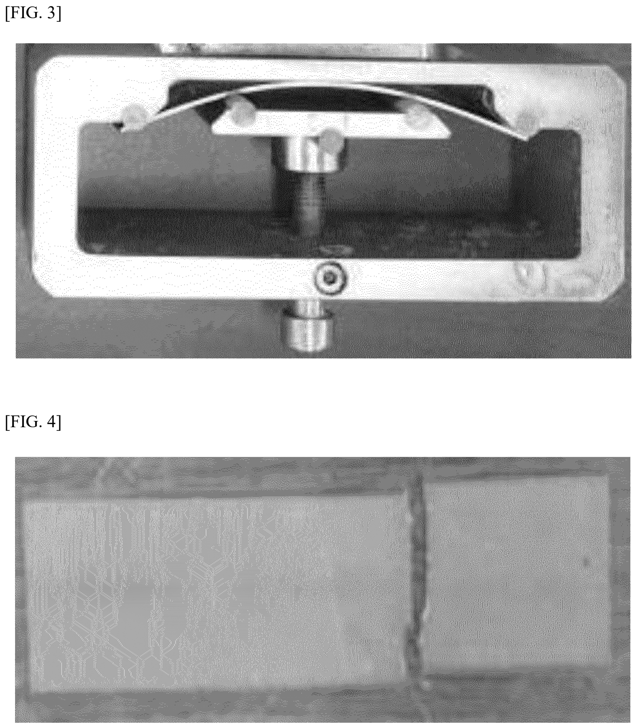

Fracture experiments were evaluated using a four-point bending test for the hot stamping components manufactured in each of Embodiment 2 and Comparative Examples 1 and 2. Specifically, in the 4-point bending test, a stress level below elastic limit, specifically of 1,000 MPa in air was applied for 100 hours to a particular point of each specimen manufactured while exposing the hot stamping components manufactured in each of the embodiments and the comparative examples to a corrosive environment, and the occurrence of stress corrosion cracking, i.e., the occurrence of fracture was checked, and the results are shown in FIGS. 3 to 5, respectively. In this case, stress corrosion cracking refers to cracks that occur when corrosion and sustained tensile stress are applied simultaneously.

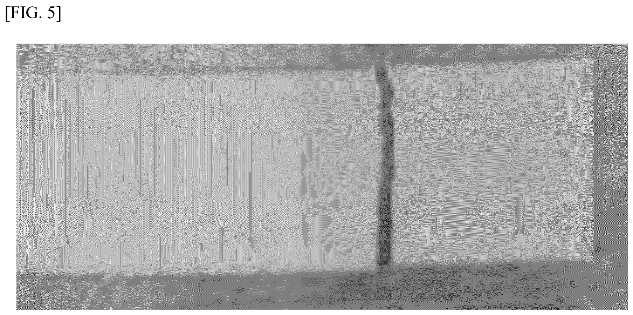

As shown in FIG. 3, it was confirmed that the hot stamping component manufactured in Embodiment 2 did not fracture. In contrast, it was confirmed that the hot stamping components manufactured in Comparative Examples 1 and 2, which are shown in FIGS. 4 and 5, respectively, fractured. In other words, it was confirmed that the hot stamping component manufactured in Embodiment 2 had hydrogen embrittlement suppressed by satisfying General Formula 3 above, compared with the hot stamping components manufactured in Comparative Examples 1 and 2 that did not satisfy General Formula 3 above.

<Description of Reference Numerals>

1: Alpha iron layer
2: Gamma layer
10: Hot stamping component
11: Steel sheet
12: Plating layer

## Claims

1. A hot stamping component comprising:

a steel sheet; and
a plating layer formed on at least one surface of the steel sheet, satisfying General Formula 1 below, and containing zinc:

[General Formula 1]

$$10^5 \sqrt{\sum_{k-1}^{n} L_k \left( \sum_{k-1}^{n} \frac{L_k}{D_k} \right)^{-1}} \, t < 3 \quad ,$$

(in the General Formula 1, when the plating layer consists of n layers with distinct structures, $L_k$ is an average thickness ($\mu$m) measured along a short axis direction at ten random locations in a k-th layer of the plating layer observed in an SEM image, $D_k$ is a value (m$^2$/s) derived through Electrochemical Hydrogen Permeation Experiment Method below, t is a total heating time (sec) during hot stamping, and n is an integer greater than or equal to 2),
<Electrochemical Hydrogen Permeation Experiment Method>

- a specimen formed of the k-th layer is placed in the middle of two cells, and hydrogen is electrically generated in one cell and is made to permeate to the other cell,
- a time it takes for hydrogen to permeate to the other cell is measured, and
- a value calculated by General Formula 2 below by using the measured time and a thickness of the specimen is defined as $D_k$:

[General Formula 2]

$$\frac{L_{sample}^{2}}{15.3 t_{sample}} \quad ,$$

(in the General Formula 2, $L_{sample}$ is the thickness (m) of the specimen, and $t_{sample}$ is a time (sec) it takes to permeate the specimen).

2. The hot stamping component of claim 1, wherein the plating layer satisfies General Formula 3 below:

[General Formula 3]

$$10^5 \sqrt{\sum_{k=1}^{n} L_k \left( \sum_{k=1}^{n} \frac{L_k}{D_k} \right)^{-1} t} < 1.7 \quad ,$$

(in the General Formula 3, when the plating layer consists of n layers with distinct structures, $L_k$ is an average thickness ($\mu$m) measured along a short axis direction at ten random locations in a k-th layer of the plating layer observed in an SEM image, $D_k$ is a value (m$^2$/s) derived through Electrochemical Hydrogen Permeation Experiment Method below, t is a total heating time (sec) during hot stamping, and n is an integer greater than or equal to 2),

< Electrochemical Hydrogen Permeation Experiment Method >

- a specimen formed of the k-th layer is placed in the middle of two cells, and hydrogen is electrically generated in one cell and is made to permeate to the other cell,
- a time it takes for hydrogen to permeate to the other cell is measured, and
- a value calculated by General Formula 2 below by using the measured time and a thickness of the specimen is defined as $D_k$:

[General Formula 2]

$$\frac{L_{sample}^2}{15.3 t_{sample}} .$$

(in the General Formula 2, $L_{sample}$ is the thickness (m) of the specimen, and $t_{sample}$ is a time (sec) it takes to permeate the specimen).

3. The hot stamping component of claim 1, wherein the plating layer satisfies General Formula 4 below:

[General Formula 4]

$$0.84 \leq 10^5 \sqrt{\sum_{k=1}^{n} L_k \left( \sum_{k=1}^{n} \frac{L_k}{D_k} \right)^{-1} t} < 1.7 \quad ,$$

(in the General Formula 4, when the plating layer consists of n layers with distinct structures, $L_k$ is an average thickness ($\mu$m) measured along a short axis direction at ten random locations in a k-th layer of the plating layer observed in an SEM image, $D_k$ is a value (m$^2$/s) derived through Electrochemical Hydrogen Permeation Experiment Method below, t is a total heating time (sec) during hot stamping, and n is an integer greater than or equal to 2),

< Electrochemical Hydrogen Permeation Experiment Method >

- a specimen formed of the k-th layer is placed in the middle of two cells, and hydrogen is electrically generated in one cell and is made to permeate to the other cell,
- a time it takes for hydrogen to permeate to the other cell is measured, and
- a value calculated by General Formula 2 below by using the measured time and a thickness of the specimen is defined as $D_k$:

[General Formula 2]

$$\frac{L_{sample}{}^{2}}{15.3 t_{sample}},$$

(in the General Formula 2, $L_{sample}$ is the thickness (m) of the specimen, and $t_{sample}$ is a time (sec) it takes to permeate the specimen).

4. The hot stamping component of claim 1, wherein the hot stamping component is a component manufactured by hot stamping a plated steel sheet having a plating layer containing zinc formed on at least one surface of a steel sheet.

5. The hot stamping component of claim 4, wherein the hot stamping comprises:

a heating step of preparing the plated steel sheet having the plating layer containing zinc formed on at least one surface of the steel sheet, and heating the prepared plated steel sheet;
a forming step of stamping the heated plated steel sheet with press dies and forming a formed body; and
a cooling step of cooling the formed body.

6. The hot stamping component of claim 5, wherein when the plated steel sheet prepared in the heating step is heated, the plated steel sheet is heated at an average temperature increase rate of 3 °C/s to 8 °C/s in a temperature interval of 600 °C to 700 °C.

7. The hot stamping component of claim 5, wherein when the plated steel sheet prepared in the heating step is heated, the plated steel sheet is heated at an average temperature increase rate of 0.5 °C/s to 3 °C/s in a temperature interval of 800 °C to X °C, and
wherein the X °C is equal to a highest temperature at which the plated steel sheet is heated in the heating step minus 10 °C.

8. The hot stamping component of claim 4, wherein a total heating time during the hot stamping is 150 seconds to 450 seconds.

9. The hot stamping component of claim 1, wherein the plating layer has a thickness of 10 $\mu$m to 30 $\mu$m.

10. A method of manufacturing a hot stamping component including a steel sheet and a plating layer formed on at least one surface of the steel sheet, satisfying General Formula 1 below, and containing zinc, the method comprising:

a heating step of preparing a plated steel sheet having the plating layer containing zinc formed on at least one surface of the steel sheet, and heating the prepared plated steel sheet;
a forming step of stamping the heated plated steel sheet with press dies and forming a formed body; and
a cooling step of cooling the formed body:

[General Formula 1]

$$10^{5} \sqrt{\sum_{k-1}^{n} L_{k} \left( \sum_{k-1}^{n} \frac{L_{k}}{D_{k}} \right)^{-1} t} < 3,$$

(in the General Formula 1, when the plating layer consists of n layers with distinct structures, $L_{k}$ is an average thickness ($\mu$m) measured along a short axis direction at ten random locations in a k-th layer of the plating layer observed in an SEM image, $D_{k}$ is a value (m$^2$/s) derived through Electrochemical Hydrogen Permeation Experiment Method below, t is a total heating time (sec) during hot stamping, and n is an integer greater than or equal to 2),
<Electrochemical Hydrogen Permeation Experiment Method>

- a specimen formed of the k-th layer is placed in the middle of two cells, and hydrogen is electrically generated in one cell and is made to permeate to the other cell,
- a time it takes for hydrogen to permeate to the other cell is measured, and
- a value calculated by General Formula 2 below by using the measured time and a thickness of the specimen is defined as $D_k$:

[General Formula 2]

$$\frac{L_{sample}^{2}}{15.3 t_{sample}},$$

(in the General Formula 2, $L_{sample}$ is the thickness (m) of the specimen, and $t_{sample}$ is a time (sec) it takes to permeate the specimen).

11. The method of claim 10, wherein when the plated steel sheet prepared in the heating step is heated, the plated steel sheet is heated at an average temperature increase rate of 3 °C/s to 8 °C/s in a temperature interval of 600 °C to 700 °C.

12. The method of claim 10, wherein when the plated steel sheet prepared in the heating step is heated, the plated steel sheet is heated at an average temperature increase rate of 0.5 °C/s to 3 °C/s in a temperature interval of 800 °C to X °C, and
wherein the X °C is equal to a highest temperature at which the plated steel sheet is heated in the heating step minus 10 °C.

13. The method of claim 10, wherein the plating layer formed on the plated steel sheet prepared in the heating step comprises a zeta layer, a delta layer, and a gamma layer.

[FIG. 1]

<u>10</u>

[FIG. 2]

[FIG. 3]

[FIG. 4]

[FIG. 5]

## INTERNATIONAL SEARCH REPORT

| International application No. |
| --- |
| **PCT/KR2023/001374** |

| A. | CLASSIFICATION OF SUBJECT MATTER |
| --- | --- |

**C23C 2/06**(2006.01)i; **G01N 15/08**(2006.01)i; **G01N 27/26**(2006.01)i; **B21D 22/02**(2006.01)i; **C21D 9/46**(2006.01)i

According to International Patent Classification (IPC) or to both national classification and IPC

| B. | FIELDS SEARCHED |
| --- | --- |

Minimum documentation searched (classification system followed by classification symbols)

C23C 2/06(2006.01); B21B 1/28(2006.01); B21D 22/02(2006.01); B21D 22/20(2006.01); C21D 6/00(2006.01); C21D 9/46(2006.01); C22C 38/04(2006.01); C23C 2/26(2006.01); C23C 28/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 핫 스탬핑(hot stamping), 아연(zinc), 도금(plating), 가열(heating), 냉각(cooling)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2400615 B1 (HYUNDAI STEEL COMPANY) 23 May 2022 (2022-05-23)<br>See claims 1 and 7. | 1-13 |
| A | KR 10-1333977 B1 (HYUNDAI HYSCO CO., LTD.) 02 December 2013 (2013-12-02)<br>See claims 1 and 11. | 1-13 |
| A | KR 10-2016-0077583 A (POSCO) 04 July 2016 (2016-07-04)<br>See paragraph [0055] and claims 1 and 5. | 1-13 |
| A | KR 10-2015-0061280 A (POSCO) 04 June 2015 (2015-06-04)<br>See paragraph [0031] and claims 1 and 3. | 1-13 |
| A | JP 2011-117036 A (JFE STEEL CORP.) 16 June 2011 (2011-06-16)<br>See paragraph [0016] and claims 1-2. | 1-13 |

| ☐ Further documents are listed in the continuation of Box C. | ☑ See patent family annex. |
| --- | --- |

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **05 April 2024** | **05 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/001374**

| Patent document cited in search report | | | Publication date (day/month/year) | Patent family member(s) | | | Publication date (day/month/year) |
|---|---|---|---|---|---|---|---|
| KR | 10-2400615 | B1 | 23 May 2022 | KR | 10-2023-0004241 | A | 06 January 2023 |
| | | | | KR | 10-2551330 | B1 | 04 July 2023 |
| | | | | WO | 2023-277291 | A1 | 05 January 2023 |
| KR | 10-1333977 | B1 | 02 December 2013 | | None | | |
| KR | 10-2016-0077583 | A | 04 July 2016 | KR | 10-1665805 | B1 | 13 October 2016 |
| KR | 10-2015-0061280 | A | 04 June 2015 | | None | | |
| JP | 2011-117036 | A | 16 June 2011 | JP | 5597980 | B2 | 01 October 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120134709